(19) Europäisches Patentamt
European Patent Office
Office européen des brevets

(11) **EP 3 853 989 B1**

(12) **EUROPÄISCHE PATENTSCHRIFT**

(45) Veröffentlichungstag und Bekanntmachung des Hinweises auf die Patenterteilung:
**22.07.2026  Patentblatt 2026/30**

(21) Anmeldenummer: **19773059.1**

(22) Anmeldetag: **19.09.2019**

(51) Internationale Patentklassifikation (IPC):
*H02M 7/48* (2007.01)          *B60L 7/00* (2006.01)
*B60L 7/14* (2006.01)          *B60L 7/16* (2006.01)
*B60L 7/18* (2006.01)          *H02M 7/537* (2006.01)
*H02M 7/53846* (2007.01)       *H02M 7/5387* (2007.01)
*H02M 7/797* (2006.01)

(52) Gemeinsame Patentklassifikation (CPC):
H02M 7/48; B60L 7/003; B60L 7/14; B60L 7/16; B60L 7/18; H02M 7/537; H02M 7/538466; H02M 7/5387; H02M 7/797; Y02T 10/70

(86) Internationale Anmeldenummer:
**PCT/EP2019/075190**

(87) Internationale Veröffentlichungsnummer:
**WO 2020/058411 (26.03.2020 Gazette 2020/13)**

(54) **STEUERUNGSEINRICHTUNG FÜR EINEN WECHSELRICHTER, WECHSELRICHTER FÜR EINE ASYNCHRONMASCHINE, FAHRZEUG UND VERFAHREN ZUM BETREIBEN EINES WECHSELRICHTERS**

CONTROL DEVICE FOR AN INVERTER, INVERTER FOR AN ASYNCHRONOUS MACHINE, VEHICLE, AND METHOD FOR OPERATING AN INVERTER

DISPOSITIF DE COMMANDE CONÇU POUR UN ONDULEUR, ONDULEUR CONÇU POUR UNE MACHINE ASYNCHRONE, VÉHICULE ET PROCÉDÉ POUR FAIRE FONCTIONNER UN ONDULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **20.09.2018  DE 102018123206**

(43) Veröffentlichungstag der Anmeldung:
**28.07.2021  Patentblatt 2021/30**

(73) Patentinhaber: **Valeo Electrification**
**95892 Cergy Pontoise (FR)**

(72) Erfinder:
• **WIEDMANN, Karsten**
**91080 Spardorf (DE)**
• **REYMANN, Markus**
**90451 Nürnberg (DE)**

(56) Entgegenhaltungen:
DE-A1- 102010 034 483        DE-A1- 102016 200 663
DE-A1- 4 440 823             DE-C1- 19 619 190
JP-A- 2015 198 463

• SOMERS CEDRIC ET AL: "Emergency DC injection braking system", 2015 IEEE INTERNATIONAL CONFERENCE ON INDUSTRIAL TECHNOLOGY (ICIT), IEEE, 17 March 2015 (2015-03-17), pages 726 - 730, XP032785250, DOI: 10.1109/ICIT.2015.7125184

**Beschreibung**

Die vorliegende Erfindung betrifft eine Steuerungseinrichtung für einen Wechselrichter, welcher einen Gleichspannungseingang und eine Leistungseinheit mit drei aus jeweils zwei Leistungsschaltelementen gebildeten Halbbrücken aufweist, wobei die Steuerungseinrichtung dazu eingerichtet ist, die Leistungsschaltelemente in einem normalen Betriebsmodus zum Wandeln einer am Gleichspannungseingang anliegenden Gleichspannung in einen an einem Wechselstromausgang bereitgestellten mehrphasigen Wechselstrom anzusteuern.

Daneben betrifft die Erfindung einen Wechselrichter für eine Asynchronmaschine, ein Fahrzeug und ein Verfahren zum Betreiben eines Wechselrichters.

In einem Antriebsstrang eines elektrisch antreibbaren Fahrzeugs kann mittels eines Wechselrichters eine von einer Gleichspannungsquelle, beispielsweise einer Hochvoltbatterie, bereitgestellte Gleichspannung in eine mehrphasige Wechselspannung für eine elektrische Maschine gewandelt werden. Während des Betriebs der elektrischen Maschine kann es zu einer Trennung der Gleichspannungsquelle von einem Gleichspannungseingang des Wechselrichters kommen. Ein solches, auch als Lastabwurf bezeichnetes Ereignis, ist häufig eine Sicherheitsmaßnahme beim Auftreten eines Fehlers. Befindet sich das Fahrzeug beim Lastabwurf in einem Rekuperationsbetrieb, wird in Induktivitäten der elektrischen Maschine gespeicherte Energie an den Gleichspannungseingang des Wechselrichters zurück gespeist und kann dort eine Überspannung verursachen, die einen Zwischenkreiskondensator und daran angeschlossene Komponenten beschädigen kann.

Bei permanenterregten Synchronmaschinen ist es bekannt, Leistungsschaltelemente des Wechselrichters zum Einnehmen eines aktiven Kurzschlusses anzusteuern, um die in den Induktivitäten gespeicherte Energie innerhalb der elektrischen Maschine in Wärme umzuwandeln. Bei einer Asynchronmaschine verursacht ein sofortiges Schalten in den aktiven Kurzschluss bei einem Lastabwurf aufgrund geringer Streuinduktivitäten der Asynchronmaschine jedoch sehr hohe Ströme durch die Leistungsschaltelemente, die dadurch beschädigt werden können.

Es ist bei Asynchronmaschinen daher bekannt, den Zwischenkreiskondensator erheblich zu überdimensionieren, sodass dieser auch bei einem Lastabwurf im Rekuperationsbetrieb der Überspannung standhält. Ein solcher Zwischenkreiskondensator ist jedoch teuer und groß. Daneben kann ein Rekuperationsmoment auf Werte begrenzt werden, bei denen keine schädliche Überspannung im Falle eines Lastabwurfs auftritt. Dies verringert jedoch die Effizienz und den Einsatzbereich des Rekuperationsbetriebs.

Der Erfindung liegt mithin die Aufgabe zugrunde, eine Möglichkeit zur Behandlung eines Lastabwurfs, insbesondere bei einer Asynchronmaschine, anzugeben, die die zuvor genannten Nachteile beseitigt.

Zur Lösung dieser Aufgabe ist erfindungsgemäß bei einer Steuerungseinrichtung der eingangs genannten Art vorgesehen, dass sie dazu eingerichtet ist, einen Signalzustand eines eine Trennung einer Gleichspannungsquelle vom Gleichspannungseingang anzeigenden Signals auszuwerten und die Leistungsschaltelemente in Abhängigkeit eines Ergebnisses der Auswertung zum wechselweisen Einnehmen eines ersten Schaltmusters, das ein Gleichstrombremsen bewirkt, und eines zweiten Schaltmusters, das einen Freilauf bewirkt, anzusteuern.

Die Erfindung beruht auf der Überlegung, dass es nach einem Lastabwurf, also nach einer Trennung der Spannungsquelle vom Gleichspannungseingang, beim Schalten des Freilaufs zu einem unerwünscht starken Anstieg der Spannung am Gleichspannungseingang kommt, wohingegen beim Gleichstrombremsen ein starker Abfall der Spannung auftritt, welcher im Extremfall zu einer schädlichen negativen Spannung am Gleichspannungseingang führen kann. Daher schlägt die Erfindung vor, wechselweise zwischen diesen beiden Betriebsarten hin und her zu schalten, sodass in Induktivitäten der elektrischen Maschine gespeicherte Energie in Wärme umgesetzt werden kann und sich die Effekte des Freilaufs und des Gleichstrombremsens gegeneinander aufheben können.

Die Erfindung ermöglicht es mithin, einen für üblicherweise im Rekuperationsbetrieb auftretende Spannungen ausgelegten Zwischenkreiskondensator zu verwenden, da eine Überschreitung seiner Spannungsfestigkeit im Freilauf durch das Schalten ins Gleichstrombremsen vermieden wird. Ebenso ist eine Beschränkung eines Rekuperationsmoments über das Maß für den normalen Betriebsmodus hinaus nicht erforderlich, sodass Effizienzeinbußen durch eine solche Begrenzung vermieden werden. Gleichzeitig kommt es nicht zu unzulässig hohen Strömen wie bei einem aktiven Kurzschluss, welche die Leistungsschaltelemente beschädigen können.

Die erfindungsgemäße Steuereinrichtung ist bevorzugt ferner dazu eingerichtet, zusätzlich zum Signalzustand auszuwerten, ob sich der Wechselrichter in einem Rekuperationsbetrieb befindet. So kann die zwischen den Schaltmustern alternierende Schaltstrategie auf die Fälle beschränkt werden, in denen eine Überlastung des Zwischenkreiskondensators besonders droht.

Grundsätzlich wird vom ersten Schaltmuster, also vom Gleichstrombremsen, zum zweiten Schaltmuster, also zum Freilauf, geschaltet, um einen Resonanzkreis zwischen den Induktivitäten der elektrischen Maschine und dem Zwischenkreiskondensator zu unterbrechen, da der Resonanzkreis die negativen Spannungen am Zwischenkreiskondensator verursachen kann. Vom zweiten Schaltmuster zum ersten Schaltmuster wird typischerweise so geschaltet, dass die zulässige Spannung am Zwischenkreiskondensator nicht überschritten wird.

Gemäß einer aufwandsarm realisierbaren Ausführungsform der erfindungsgemäßen Steuerungseinrichtung, ist diese ferner dazu eingerichtet, nach Ablauf einer vorgegebenen Zeitspanne vom ersten Schaltmuster zum zweiten Schaltmuster zu wechseln und/oder nach Ablauf einer vorgegebenen Zeitspanne vom zweiten Schaltmuster zum ersten Schaltmuster zu wechseln. Die genannten Zeitspannen können empirisch anhand maximal möglicher Rekuperationsspannungen bestimmt werden, so dass der Resonanzkreis unterbrochen bzw. die zulässige Spannung am Zwischenkreiskondensator nicht überschritten wird.

Daneben kann bei der erfindungsgemäßen Steuerungseinrichtung vorgesehen sein, dass diese ferner dazu eingerichtet ist, das wechselweise Ansteuern in Abhängigkeit eines eine Spannung am Gleichspannungseingang beschreibenden Spannungswerts zu steuern. Dazu weist die Steuerungseinrichtung bevorzugt einen Eingang für den die Spannung am Gleichspannungseingang beschreibenden Spannungswert auf. Der Wechselrichter umfasst dann typischerweise eine Spannungserfassungseinheit, welche zum Erfassen der Spannung am Gleichspannungseingang eingerichtet ist. Da eine solche Spannungserfassungseinheit in vielen Fällen ohnehin vorgesehen ist, wird kein zusätzlicher Hardware-Aufwand seitens des Wechselrichters verursacht.

Ergänzend oder alternativ zur zuvor beschriebenen Zeitsteuerung kann mit Vorteil vorgesehen sein, dass die Steuerungseinrichtung ferner dazu eingerichtet ist, beim Erfassen eines Erreichens eines Spannungsschwellwerts durch den Spannungswert vom ersten Schaltmuster zum zweiten Schaltmuster und/oder beim Erfassen eines Erreichens eines Spannungsschwellwerts durch den Spannungswert vom zweiten Schaltmuster zum ersten Schaltmuster zu wechseln. Die Spannungsschwellwerte sind dann zweckmäßigerweise so gewählt, dass der Resonanzkreis zum richtigen Zeitpunkt unterbrochen bzw. die zulässige Spannung am Zwischenkreiskondensator nicht überschritten wird. Dies ermöglicht ein besonders schnelles Abklingen der durch die in den Induktivitäten gespeicherten Energie verursachten Ströme.

Daneben kann die Steuerungseinrichtung ferner dazu eingerichtet sein, die Leistungsschaltelemente dauerhaft zum Einnehmen eines einen sicheren Betriebszustand bewirkenden Schaltmusters anzusteuern, wenn der Spannungswert beim Ansteuern der Leistungsschaltelemente mit dem zweiten Schaltmuster einen vorgegebenen Spannungsschwellwert nicht überschreitet. Ist dies der Fall, ist die in den Induktivitäten der elektrischen Maschine gespeicherte Energie soweit in Wärme umgesetzt, dass dauerhaft der sichere Betriebszustand eingenommen werden und das Fahrzeug beispielsweise ohne unerwünschte Bremsmomente ausrollen kann. Dabei ist das den sicheren Betriebszustand bewirkende Schaltmuster bevorzugt das zweite Schaltmuster.

Das erste Schaltmuster beschreibt typischerweise, dass bei einer Halbbrücke das mit einem ersten Potential des Gleichspannungseingangs verbundene Leistungsschaltelement im sperrenden Zustand und das Andere im leitenden Zustand ist, bei einer Halbbrücke das mit einem zweiten Potential des Gleichspannungseingangs verbundene Leistungsschaltelement im sperrenden Zustand und das Andere im leitenden Zustand ist und bei einer Halbbrücke beide Leistungsschaltelemente in sperrenden Zustand sind. Die konkrete Ausgestaltung des ersten Schaltmusters ist bevorzugt vom Phasenwinkel am Wechselstromausgang im Moment des Lastabwurfs abhängig. Eine fehlerhafte Ermittlung des ersten Schaltmusters kann nämlich entweder dazu führen, dass keine Begrenzung der Gleichspannung eintritt oder dass unerwünscht hohe Ströme durch die Leistungsschaltelement auftreten.

Die erfindungsgemäße Steuerungseinrichtung kann daher ferner dazu eingerichtet sein, das erste Schaltmuster in Abhängigkeit wenigstens eines am Wechselspannungsausgang fließenden Strom beschreibenden Stromwerts zu ermitteln. Der Stromwert kann entweder gemessen werden, wobei ein Eingang für den Stromwert bei der Steuerungseinrichtung vorgesehen sein kann. Bevorzugt wird der Stromwert jedoch anhand von durch die Steuerungseinrichtung im normalen Betriebsmodus vorgegebenen Sollwerten ermittelt.

Bevorzugt ist vorgesehen, dass das erste Schaltmuster das Schalten eines mit einem hohen Potential des Gleichspannungseingangs verbundenen Leistungsschaltelements in einen leitenden Zustand beschreibt, wenn ein Strom aus dem Mittelabgriff der durch das Leistungsschaltelement gebildeten Halbbrücke positiv ist und eine Änderung des Stromes nach der Zeit negativ ist. Dabei kann das Schaltmuster das Schalten der übrigen mit dem hohen Potential des Gleichspannungseingangs verbundenen Leistungsschaltelemente in einen sperrenden Zustand beschreiben.

Ferner kann vorgesehen sein, dass das erste Schaltmuster das Schalten eines mit dem niedrigen Potential des Gleichspannungseingangs verbundenen Leistungsschaltelements in einen leitenden Zustand beschreibt, wenn ein Strom aus dem Mittelabgriff der durch das Leistungsschaltelement gebildeten Halbbrücke negativ ist und eine Änderung des Stroms nach der Zeit positiv ist. Dabei kann das erste Schaltmuster das Schalten der übrigen mit dem niedrigen Potential des Gleichspannungseingangs verbundenen Leistungsschaltelemente in einen sperrenden Zustand beschreiben.

Zweckmäßigerweise beschreibt das zweite Schaltmuster das Schalten aller Leistungsschaltelemente in einen sperrenden Zustand.

Daneben betrifft die Erfindung einen Wechselrichter für eine Asynchronmaschine, umfassend einen Gleichspannungseingang, eine Leistungseinheit mit drei aus jeweils zwei Leistungsschaltelementen gebildeten Halbbrücken und eine erfindungsgemäße Steuerungseinrichtung.

Die Erfindung betrifft ferner ein Fahrzeug, umfassend eine Asynchronmaschine zum Antreiben des Fahrzeugs und einen erfindungsgemäßen Wechselrichter.

Die Erfindung betrifft schließlich ein Verfahren zum Betreiben eines Wechselrichters, welcher einen Gleichspannungseingang und eine Leistungseinheit mit drei aus jeweils zwei Leistungsschaltelementen gebildeten Halbbrücken aufweist, umfassend folgende Schritte:

- Ansteuern der Leistungsschaltelemente in einem normalen Betriebsmodus zum Wandeln einer am Gleichspannungseingang anliegenden Gleichspannung in einen an einem Wechselstromausgang bereitgestellten mehrphasigen Wechselstrom;
- Auswerten eines Signalzustands eines eine Trennung einer Gleichspannungsquelle vom Gleichspannungseingang anzeigenden Signals; und
- Ansteuern der Leistungsschaltelemente in Abhängigkeit eines Ergebnisses der Auswertung zum wechselweisen Einnehmen eines ersten Schaltmusters, das ein Gleichstrombremsen bewirkt, und eines zweiten Schaltmusters, das einen Freilauf bewirkt.

Sämtliche Ausführungen zur erfindungsgemäßen Steuerungseinrichtung lassen sich analog auf den erfindungsgemäßen Wechselrichter, das erfindungsgemäße Fahrzeug und das erfindungsgemäße Verfahren übertragen, sodass auch mit diesen die zuvor genannten Vorteile erzielt werden können.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:

Fig. 1    ein Schaltbild eines Ausführungsbeispiels des erfindungsgemäßen Wechselrichters mit einem Ausführungsbeispiel der erfindungsgemäßen Steuerungseinrichtung;

Fig. 2    Verläufe von einer Spannung an einem Gleichspannungseingang, von Phasenströmen an einem Wechselspannungsausgang und von einem Drehmoment über die Zeit beim Betrieb des in Fig. 1 gezeigten Wechselrichters; und

Fig. 3    eine Prinzipskizze eines erfindungsgemäßen Fahrzeugs.

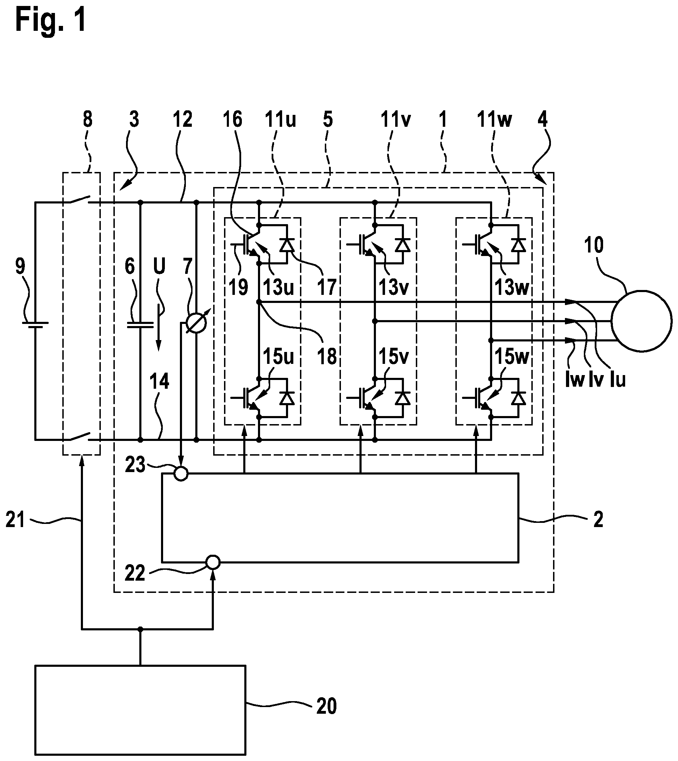

Fig. 1 ist ein Schaltbild eines Ausführungsbeispiels eines Wechselrichters 1 mit einem Ausführungsbeispiel einer Steuerungseinrichtung 2. Daneben umfasst der Wechselrichter einen Gleichspannungseingang 3, einen Wechselspannungsausgang 4, eine Leistungseinheit 5 sowie einen Zwischenkreiskondensator 6, der parallel zum Gleichspannungseingang 3 geschaltet ist. Zur Erfassung einer über dem Zwischenkreiskondensators 6 bzw. am Gleichspannungseingang 3 anliegenden Gleichspannung U ist ferner eine Spannungserfassungseinheit 7 vorgesehen.

Der Gleichspannungseingang 3 ist über eine zweipolige, aus Schützen gebildete Trenneinrichtung 8 mit einer Gleichspannungsquelle 9 in Form einer Hochvoltbatterie verbunden, welche im geschlossenen Zustand der Trenneinrichtung 8 die Gleichspannung U am Gleichspannungseingang 3 bereitstellt. Diese wird vom Wechselrichter 1 in eine an seinem Wechselstromausgang 4 bereitgestellte mehrphasige, hier dreiphasige, Wechselspannung gewandelt. An diesem ist eine elektrische Maschine in Form einer Asynchronmaschine 10 angeschlossen.

Die Leistungseinheit 5 umfasst drei Halbbrücken 11u, 11v, 11w, die jeweils aus einer Reihenschaltung von mit einem oberen Potential 12 des Gleichspannungseingangs 3 verbundenen Leistungsschaltelementen 13u, 13v, 13w und mit einem niedrigen Potential 14 des Gleichspannungseingangs 3 verbunden Leistungsschaltelementen 15u, 15v, 15w gebildet sind. Jedes Leistungsschaltelement 13u, 13v, 13w, 15u, 15v, 15w umfasst einen Bipolartransistor mit isoliertem Gate (IGBT) 16 und eine dazu parallel geschaltete Diode 17. Alternativ dazu kann ein jeweiliges Leistungsschaltelement 13u, 13v, 13w, 15u, 15v, 15w durch einen Leistungs-MOSFET realisiert sein. Ein Mittelangriff 18 einer jeweiligen Halbbrücke 11u, 11v, 11w ist mit dem Wechselspannungsausgang 4 verbunden, an dem Phasenströme $I_u$, $I_v$, $I_w$ für die Asynchronmaschine 10 bereitstellbar sind.

Die Steuerungseinrichtung 2 ist dazu eingerichtet, die Leistungsschaltelemente 13u, 13v, 13w, 15u, 15v, 15w in einem normalen, getakteten Betriebsmodus zum Wandeln der am Gleichspannungseingang 3 anliegenden Gleichspannung U in den mehrphasigen Wechselstrom zu wandeln. Im normalen Betriebsmodus ist ebenfalls ein Rekuperationsbetrieb möglich, in welchem die elektrische Maschine 10 als Generator betrieben wird und elektrische Energie in die Hochvoltbatterie zurückspeist. Zur Ansteuerung ist die Steuerungseinrichtung 2 mit einem Steuereingang 19 eines jeweiligen Leistungsschaltelements 13u, 13v, 13w, 15u, 15v, 15w verbunden.

Bei einem durch ein externes Steuergerät 20 erkannten Fehlerfall wird ein Lastabwurf initiiert, indem das Steuergerät ein Signal 21 bereitstellt, welches die Trenneinrichtung 8 zum Öffnen der Schütze und somit zum Trennen der Gleichspannungsquelle 9 vom Gleichspannungseingang 3 ansteuert. Das Signal 21, welches dementsprechend die Trennung der Gleichspannungsquelle 9 vom Gleichspannungseingang 3 anzeigt, liegt ferner an einem Eingang 22 der Steuerungseinrichtung 2 an. Das Signal 21 wird alternativ oder zusätzlich intern in der Steuerungseinrichtung 2 erzeugt, wenn diese selbst einen Lastabwurf erfasst.

Die Steuerungseinrichtung 2 wertet aus, ob das Signal 21 vorliegt und ob sich der Wechselrichter 1 zu diesem Zeitpunkt im Rekuperationsbetrieb befindet. Ist dies der Fall, so beendet die Steuerungseinheit 2 den normalen Betriebsmodus und leitet einen Lastabwurfbetriebsmodus ein, in welchem sie die Leistungsschaltelemente 13u, 13v, 13w, 15u, 15v, 15w zum wechselweisen Einnehmen eines ersten Schaltmusters, das ein Gleichstrombremsen bewirkt, und eines zweiten Schaltmusters, das einen Freilauf bewirkt, ansteuert.

Dazu ermittelt die Steuerungseinrichtung 2 in Abhängigkeit von Stromwerten, welche die Phasenströme $I_u$, $I_v$, $I_w$ beschreiben, das erste Schaltmuster, welches das Gleichstrombremsen bewirkt. Dazu ist innerhalb der Steuerungseinrichtung 2 eine Look-Up-Tabelle hinterlegt, welche den Strömen $I_u$, $I_v$, $I_w$ und deren Ableitungen nach der Zeit $dI_u/dt$, $dI_v/dt$, $dI_w/dt$ im Moment der Beendigung des getakteten Betriebs entsprechende Schaltzustände der Leistungsschaltelemente 13u, 13v, 13w, 15u, 15v, 15w zuordnet. Die folgende Tabelle zeigt diese Zuordnung:

| $I_u$ | $\dfrac{dI_u}{dt}$ | $I_v$ | $\dfrac{dI_v}{dt}$ | $I_w$ | $\dfrac{dI_w}{dt}$ | Schaltzustand Leistungsschaltelement | | | | | |
|---|---|---|---|---|---|---|---|---|---|---|---|
| | | | | | | 13u | 13v | 13w | 15u | 15v | 15w |
| >0 | <0 | <0 | >0 | - | - | 1 | 0 | 0 | 0 | 1 | 0 |
| >0 | <0 | - | - | <0 | >0 | 1 | 0 | 0 | 0 | 0 | 1 |
| <0 | >0 | >0 | <0 | - | - | 0 | 1 | 0 | 1 | 0 | 0 |
| - | - | >0 | <0 | <0 | >0 | 0 | 1 | 0 | 0 | 0 | 1 |
| <0 | >0 | - | - | >0 | <0 | 0 | 0 | 1 | 1 | 0 | 0 |
| - | - | <0 | >0 | >0 | <0 | 0 | 0 | 1 | 0 | 1 | 0 |

Dabei bedeutet eine "1", dass das jeweilige Schaltelement 13u, 13v, 13w, 15u, 15v, 15w zum Leiten angesteuert wird, und eine "0", dass es zum Sperren angesteuert wird. Das zweite, den Freilauf realisierende Schaltmuster beschreibt, dass alle Leistungsschaltelemente 13u, 13v, 13w, 15u, 15v, 15w zum Sperren angesteuert werden.

Das wechselweise Schalten zwischen dem ersten Schaltmuster und dem zweiten Schaltmuster erfolgt im vorliegenden Ausführungsbeispiel zeitgesteuert. Das heißt, die Steuerungseinrichtung 2 steuert die Leistungsschaltelemente 13u, 13v, 13w, 15u, 15v, 15w jeweils für eine vorgegebene Zeitspanne gemäß dem ersten Schaltmuster bzw. dem zweiten Schaltmuster an.

Dieses wechselweise Schalten wird beendet, wenn die Gleichspannung U beim Schalten des zweiten Schaltmusters, also des Freilaufs, einen vorgegebenen Spannungsschwellwert nicht überschreitet. Dazu wertet die Steuerungseinrichtung 2 Spannungswerte aus, die ihr von der Spannungserfassungseinheit 7 an einem Eingang 23 bereitgestellt werden. Nach Beendigung des wechselweisen Schaltens steuert die Steuerungseinrichtung 2 die Leistungsschaltelemente 13u, 13v, 13w, 15u, 15v, 15w dauerhaft gemäß dem zweiten Schaltmuster an, das einen sicheren Betriebszustand realisiert.

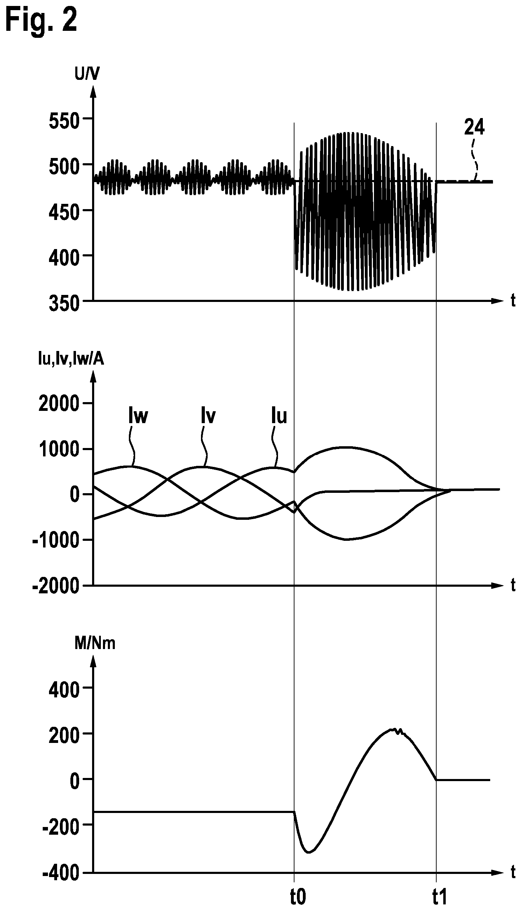

Fig. 2 zeigt Verläufe der Gleichspannung U, der Phasenströme $I_u$, $I_v$, $I_w$ und eines resultierenden Drehmoments M der Asynchronmaschine 10 über die Zeit t in einer beispielhaften Konfiguration des Wechselrichters 1. Zum einem Zeitpunkt $t_0$ tritt dabei der Lastabwurf auf und die Steuerungseinrichtung 2 überführt den Wechselrichter aus dem normalen Betriebsmodus in den Lastabwurfbetriebsmodus.

Vor dem Zeitpunkt $t_0$ befindet sich die Asynchronmaschine 10 im Rekuperationsbetrieb, was am negativen Drehmoment M, dem im Wesentlichen harmonischen Verlauf der Phasenströme $I_u$, $I_v$, $I_w$ und dem nur geringfügig oszillierenden Verlauf der Gleichspannung U erkennbar ist. Zum Zeitpunkt $t_0$ hat der Phasenstrom $I_u$ gerade sein Maximum hinter sich gelassen. Der Phasenstrom $I_v$ befindet sich kurz vor dem Nulldurchgang und steigt an. Es gilt mithin:

$$I_u > 0 \ \wedge \ \frac{dI_u}{dt} < 0 \ \wedge \ I_v < 0 \ \wedge \ \frac{dI_v}{dt} > 0$$

Die Steuerungseinrichtung 2 ermittelt folglich gemäß der zuvor gezeigten Tabelle das erste Schaltmuster zum Gleichstrombremsen, bei dem die Leistungsschaltelemente 13u, 15v leiten und die übrigen Leistungsschaltelemente 13v, 13w, 15u, 15w sperren. Die Steuerungseinrichtung 2 steuert die Leistungsschaltelemente 13u, 13v, 13w, 15u, 15v, 15w dann gemäß dem ermittelten ersten Schaltmuster für eine vorgegebene Dauer an. Anschließend steuert die Steuereinrichtung 2 alle Leistungsschaltelemente 13u, 13v, 13w, 15u, 15v, 15w für eine vorgegebene Dauer zum Sperren an, also gemäß dem zweiten Schaltmuster, das den Freilauf realisiert.

Zwischen den beiden Schaltmustern wird solange wechselweise geschaltet bis die Gleichspannung U beim Ansteuern gemäß dem zweiten Schaltmuster einen Spannungsschwellwert, der in Fig. 2 durch eine gestrichelte Linie 24 gekennzeichnet ist, zu einem Zeitpunkt $t_1$ nicht mehr überschreitet. Ab dem Zeitpunkt $t_1$ werden die Leistungsschaltelemente 13u, 13v, 13w, 15u, 15v, 15w dauerhaft gemäß dem zweiten Schaltmuster angesteuert. Wie Fig. 2 ferner zu entnehmen ist, klingen die Phasenströme $I_u$, $I_v$, $I_w$ zwischen den Zeitpunkten $t_0$ und $t_1$ ohne große Stromspitzenwerte ab und es entsteht nur kurzzeitig eine geringe Änderung des Drehmoments M.

Gemäß einem weiteren Ausführungsbeispiel erfolgt das wechselweise Schalten zwischen dem ersten und dem zweiten Schaltmuster nicht zeitgesteuert, sondern spannungsgesteuert. Dabei wechselt die Steuerungseinrichtung 2 jeweils dann zwischen den Schaltmustern, wenn der durch die Spannungserfassungseinheit 7 bereitgestellter Spannungswert einen für ein jeweiliges Schaltmuster definierten Spannungsschwellwert erreicht.

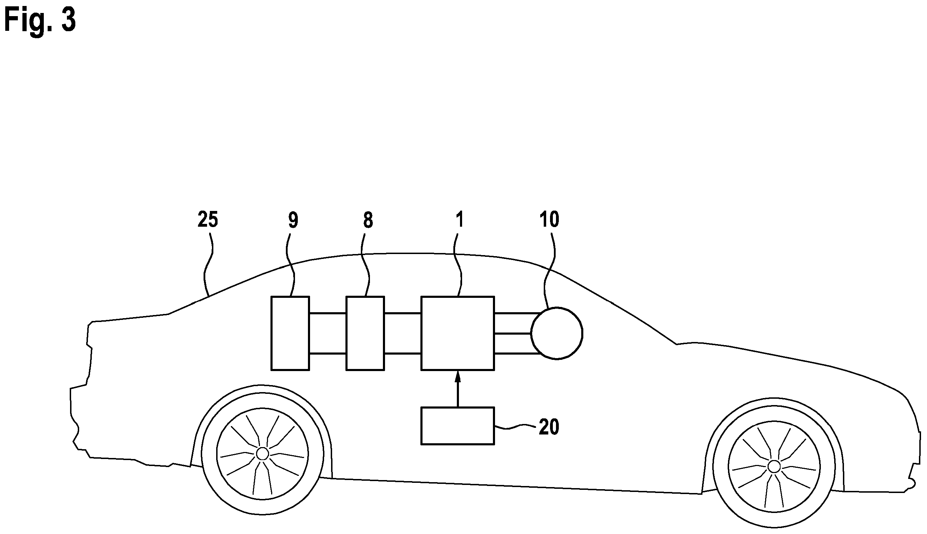

Fig. 3 ist eine Prinzipskizze eines Ausführungsbeispiels eines Fahrzeugs 25, umfassend einen Wechselrichter 1 gemäß einem der zuvor beschriebenen Ausführungsbeispiele. Der Wechselrichter 1 ist analog zu Fig. 1 über eine Trenneinrichtung 8 mit einer Gleichspannungsquelle 9, mit einer Asynchronmaschine 10, welche zum Antreiben des Fahrzeugs 25 eingerichtet ist, und mit einem übergeordneten Steuergerät 20 verbunden.

**Patentansprüche**

1. Steuerungseinrichtung (2) für einen Wechselrichter (1), welcher einen Gleichspannungseingang (3) und eine Leistungseinheit (5) mit drei aus jeweils zwei Leistungsschaltelementen (13u, 13v, 13w, 15u, 15v, 15w) gebildeten Halbbrücken (11u, 11v, 11w) aufweist, wobei die Steuerungseinrichtung (2) dazu eingerichtet ist, die Leistungsschaltelemente (13u, 13v, 13w, 15u, 15v, 15w) in einem normalen Betriebsmodus zum Wandeln einer am Gleichspannungseingang (3) anliegenden Gleichspannung in einen an einem Wechselstromausgang (4) bereitgestellten mehrphasigen Wechselstrom anzusteuern und einen Signalzustand eines eine Trennung einer Gleichspannungsquelle (9) vom Gleichspannungseingang (3) anzeigenden Signals (21) auszuwerten,
   **dadurch gekennzeichnet,**
   **dass** die Steuerungseinrichtung (2) ferner dazu eingerichtet ist, die Leistungsschaltelemente (13u, 13v, 13w, 15u, 15v, 15w) in Abhängigkeit eines Ergebnisses der Auswertung zum wechselweisen Einnehmen eines ersten Schaltmusters, das ein Gleichstrombremsen bewirkt, und eines zweiten Schaltmusters, das einen Freilauf bewirkt, anzusteuern.

2. Steuerungseinrichtung nach Anspruch 1, welche ferner dazu eingerichtet ist, zusätzlich zum Signalzustand auszuwerten, ob sich der Wechselrichter (1) in einem Rekuperationsbetrieb befindet.

3. Steuerungseinrichtung nach Anspruch 1 oder 2, welche ferner dazu eingerichtet ist, nach Ablauf einer vorgegebenen Zeitspanne vom ersten Schaltmuster zum zweiten Schaltmuster zu wechseln und/oder nach Ablauf einer vorgegebenen Zeitspanne vom zweiten Schaltmuster zum ersten Schaltmuster zu wechseln.

4. Steuerungseinrichtung nach einem der vorhergehenden Ansprüche, welche ferner dazu eingerichtet ist, das wechselweise Ansteuern in Abhängigkeit eines eine Spannung am Gleichspannungseingang (3) beschreibenden Spannungswerts zu steuern.

5. Steuerungseinrichtung nach Anspruch 4, welche ferner dazu eingerichtet ist, beim Erfassen eines Erreichens eines Spannungsschwellwerts durch den Spannungswert vom ersten Schaltmuster zum zweiten Schaltmuster und/oder beim Erfassen eines Erreichens eines Spannungsschwellwerts durch den Spannungswert vom zweiten Schaltmuster zum ersten Schaltmuster zu wechseln.

6. Steuerungseinrichtung nach Anspruch 4 oder 5, welche ferner dazu eingerichtet ist, die Leistungsschaltelemente dauerhaft zum Einnehmen eines einen sicheren Betriebszustand bewirkenden Schaltmusters anzusteuern, wenn der Spannungswert beim Ansteuern der Leistungsschaltelemente (13u, 13v, 13w, 15u, 15v, 15w) mit dem zweiten Schaltmuster einen vorgegebenen Spannungsschwellwert nicht überschreitet.

7. Steuerungseinrichtung nach Anspruch 6, wobei das den sicheren Betriebszustand bewirkende Schaltmuster das zwei Schaltmuster ist.

8. Steuerungseinrichtung nach einem der vorhergehenden Ansprüche, welche ferner dazu eingerichtet ist, das erste Schaltmuster in Abhängigkeit wenigstens eines einen am Wechselspannungsausgang (4) fließenden Strom beschreibenden Stromwerts zu ermitteln.

9. Steuerungseinrichtung nach Anspruch 8, wobei das erste Schaltmuster das Schalten eines mit einem hohen Potential (12) des Gleichspannungseingangs verbundenen Leistungsschaltelements (13u, 13v, 13w) in einen leitenden Zustand beschreibt, wenn ein Strom aus dem Mittelabgriff der durch das Leistungsschaltelement (13u, 13v, 13w) gebildeten Halbbrücke (11u, 11v, 11w) positiv ist und eine Änderung des Strom nach der Zeit negativ ist.

**10.** Steuerungseinrichtung nach Anspruch 9, wobei das Schaltmuster das Schalten der übrigen mit dem hohen Potential (12) des Gleichspannungseingangs (3) verbundenen Leistungsschaltelemente (13u, 13v, 13w) in einen sperrenden Zustand beschreibt.

**11.** Steuerungseinrichtung nach einem der Ansprüche 8 bis 10, wobei das erste Schaltmuster das Schalten eines mit dem niedrigen Potential (14) des Gleichspannungseingangs (3) verbundenen Leistungsschaltelements (15u, 15v, 15w) in einen leitenden Zustand beschreibt, wenn ein Strom aus dem Mittelabgriff der durch das Leistungsschaltelement (15u, 15v, 15w) gebildeten Halbbrücke (11u, 11v, 11w) negativ ist und eine Änderung des Stroms nach der Zeit positiv ist.

**12.** Steuerungseinrichtung nach Anspruch 11, wobei das erste Schaltmuster das Schalten der übrigen mit dem niedrigen Potential (14) des Gleichspannungseingangs (3) verbundenen Leistungsschaltelemente (15u, 15v, 15w) in einen sperrenden Zustand beschreibt.

**13.** Wechselrichter (1) für eine Asynchronmaschine (10), umfassend einen Gleichspannungseingang (3), eine Leistungseinheit (5) mit drei aus jeweils zwei Leistungsschaltelementen (13u, 13v, 13w, 15u, 15v, 15w) gebildeten Halbbrücken (11u, 11v, 11w) und eine Steuerungseinrichtung (2) nach einem der vorhergehenden Ansprüche.

**14.** Fahrzeug (25), umfassend eine Asynchronmaschine (10) zum Antreiben des Fahrzeugs (25) und einen Wechselrichter (1) nach Anspruch 13.

**15.** Verfahren zum Betreiben eines Wechselrichters (1), welcher einen Gleichspannungseingang (3) und eine Leistungseinheit (5) mit drei aus jeweils zwei Leistungsschaltelementen (13u, 13v, 13w, 15u, 15v, 15w) gebildeten Halbbrücken (11u, 11v, 11w) aufweist, umfassend folgende Schritte:

- Ansteuern der Leistungsschaltelemente (13u, 13v, 13w, 15u, 15v, 15w) in einem normalen Betriebsmodus zum Wandeln einer am Gleichspannungseingang (3) anliegenden Gleichspannung in einen an einem Wechselstromausgang (4) bereitgestellten mehrphasigen Wechselstrom;
- Auswerten eines Signalzustands eines eine Trennung einer Gleichspannungsquelle (9) vom Gleichspannungseingang (3) anzeigenden Signals (22); und
- Ansteuern der Leistungsschaltelemente (13u, 13v, 13w, 15u, 15v, 15w) in Abhängigkeit eines Ergebnisses der Auswertung zum wechselweisen Einnehmen eines ersten Schaltmusters, das ein Gleichstrombremsen bewirkt, und eines zweiten Schaltmusters, das einen Freilauf bewirkt.

**Claims**

**1.** A control device (2) for an inverter (1), which has a DC voltage input (3) and a power unit (5) with three half-bridges (11u, 11v, 11w) formed from two power switching elements (13u, 13v, 13w, 15u, 15v, 15w) respectively, wherein the control device (2) is configured to control the power switching elements (13u, 13v, 13w, 15u, 15v, 15w) in a normal operating mode for converting a DC voltage applied at the DC voltage input (3) into a multi-phase alternating current provided at an AC output (4), and to evaluate a signal state of a signal (21) indicating a disconnection of a DC voltage source (9) from the DC voltage input (3),
**characterized in that** the control device (2) is further configured to control the power switching elements (13u, 13v, 13w, 15u, 15v, 15w), depending on a result of the evaluation, to alternately adopt a first switching pattern, which effects DC braking, and a second switching pattern, which effects freewheeling.

**2.** The control device according to claim 1, which is further configured to evaluate, in addition to the signal state, whether the inverter (1) is in a recuperation operation.

**3.** The control device according to claim 1 or 2, which is further configured to change from the first switching pattern to the second switching pattern after a predetermined period of time has elapsed, and/or to change from the second switching pattern to the first switching pattern after a predetermined period of time has elapsed.

**4.** The control device according to one of the preceding claims, which is further configured to control the alternate controlling depending on a voltage value describing a voltage at the DC voltage input (3).

**5.** The control device according to claim 4, which is further configured to change from the first switching pattern to the second switching pattern upon detecting that the voltage value reaches a voltage threshold value, and/or to change from the second switching pattern to the first switching pattern upon detecting that the voltage value reaches a voltage threshold value.

6. The control device according to claim 4 or 5, which is further configured to permanently control the power switching elements to adopt a switching pattern effecting a safe operating state if the voltage value does not exceed a predetermined voltage threshold value when controlling the power switching elements (13u, 13v, 13w, 15u, 15v, 15w) with the second switching pattern.

7. The control device according to claim 6, wherein the switching pattern effecting the safe operating state is the second switching pattern.

8. The control device according to one of the preceding claims, which is further configured to determine the first switching pattern depending on at least one current value describing a current flowing at the AC output (4).

9. The control device according to claim 8, wherein the first switching pattern describes switching a power switching element (13u, 13v, 13w) connected to a high potential (12) of the DC voltage input into a conducting state if a current from the center tap of the half-bridge (11u, 11v, 11w) formed by the power switching element (13, 13v, 13w) is positive and a change of the current over time is negative.

10. The control device according to claim 9, wherein the switching pattern describes switching the remaining power switching elements (13u, 13v, 13w) connected to the high potential (12) of the DC voltage input (3) into a blocking state.

11. The control device according to one of claims 8 to 10, wherein the first switching pattern describes switching a power switching element (15u, 15v, 15w) connected to the low potential (14) of the DC voltage input (3) into a conducting state if a current from the center tap of the half-bridge (11u, 11v, 11w) formed by the power switching element (15u, 15v, 15w) is negative and a change of the current over time is positive.

12. The control device according to claim 11, wherein the first switching pattern describes switching the remaining power switching elements (15u, 15v, 15w) connected to the low potential (14) of the DC voltage input (3) into a blocking state.

13. An inverter (1) for an asynchronous machine (10), comprising a DC voltage input (3), a power unit (5) with three half-bridges (11u, 11v, 11w) formed from two power switching elements (13u, 13v, 13w, 15u, 15v, 15w) respectively, and a control device (2) according to one of the preceding claims.

14. A vehicle (25), comprising an asynchronous machine (10) for driving the vehicle (25) and an inverter (1) according to claim 13.

15. A method for operating an inverter (1), which has a DC voltage input (3) and a power unit (5) with three half-bridges (11u, 11v, 11w) formed from two power switching elements (13u, 13v, 13w, 15u, 15v, 15w) respectively, comprising the following steps:

   • controlling the power switching elements (13u, 13v, 13w, 15u, 15v, 15w) in a normal operating mode for converting a DC voltage applied at the DC voltage input (3) into a multi-phase alternating current provided at an AC output (4);
   • evaluating a signal state of a signal (22) indicating a disconnection of a DC voltage source (9) from the DC voltage input (3); and
   • controlling the power switching elements (13u, 13v, 13w, 15u, 15v, 15w), depending on a result of the evaluation, to alternately adopt a first switching pattern, which effects DC braking, and a second switching pattern, which effects freewheeling.

**Revendications**

1. Dispositif de commande (2) pour un onduleur (1), qui présente une entrée de tension continue (3) et une unité de puissance (5) avec trois demi-ponts (11u, 11v, 11w) formés chacun de deux éléments de commutation de puissance (13u, 13v, 13w, 15u, 15v, 15w), dans lequel le dispositif de commande (2) est configuré pour commander les éléments de commutation de puissance (13u, 13v, 13w, 15u, 15v, 15w) dans un mode de fonctionnement normal afin de convertir une tension continue appliquée à l'entrée de tension continue (3) en un courant alternatif multiphasé fourni à une sortie de courant alternatif (4), et pour évaluer un état de signal d'un signal (21) indiquant une séparation d'une source de tension continue (9) de l'entrée de tension continue (3),

**caractérisé en ce que** le dispositif de commande (2) est en outre configuré pour commander les éléments de commutation de puissance (13u, 13v, 13w, 15u, 15v, 15w), en fonction d'un résultat de l'évaluation, pour adopter en alternance un premier motif de commutation, qui provoque un freinage par courant continu, et un deuxième motif de commutation, qui provoque une roue libre.

2. Dispositif de commande selon la revendication 1, qui est en outre configuré pour évaluer, en plus de l'état du signal, si l'onduleur (1) se trouve dans un mode de récupération.

3. Dispositif de commande selon la revendication 1 ou 2, qui est en outre configuré pour passer du premier motif de commutation au deuxième motif de commutation après l'écoulement d'un laps de temps prédéterminé, et/ou pour passer du deuxième motif de commutation au premier motif de commutation après l'écoulement d'un laps de temps prédéterminé.

4. Dispositif de commande selon l'une des revendications précédentes, qui est en outre configuré pour commander la commande alternée en fonction d'une valeur de tension décrivant une tension à l'entrée de tension continue (3).

5. Dispositif de commande selon la revendication 4, qui est en outre configuré pour passer du premier motif de commutation au deuxième motif de commutation lors de la détection de l'atteinte d'une valeur seuil de tension par la valeur de tension, et/ou pour passer du deuxième motif de commutation au premier motif de commutation lors de la détection de l'atteinte d'une valeur seuil de tension par la valeur de tension.

6. Dispositif de commande selon la revendication 4 ou 5, qui est en outre configuré pour commander durablement les éléments de commutation de puissance pour adopter un motif de commutation provoquant un état de fonctionnement sûr, si la valeur de tension, lors de la commande des éléments de commutation de puissance (13u, 13v, 13w, 15u, 15v, 15w) avec le deuxième motif de commutation, ne dépasse pas une valeur seuil de tension prédéterminée.

7. Dispositif de commande selon la revendication 6, dans lequel le motif de commutation provoquant l'état de fonctionnement sûr est le deuxième motif de commutation.

8. Dispositif de commande selon l'une des revendications précédentes, qui est en outre configuré pour déterminer le premier motif de commutation en fonction d'au moins une valeur de courant décrivant un courant circulant à la sortie de courant alternatif (4).

9. Dispositif de commande selon la revendication 8, dans lequel le premier motif de commutation décrit la commutation d'un élément de commutation de puissance (13u, 13v, 13w) relié à un potentiel haut (12) de l'entrée de tension continue vers un état conducteur, si un courant provenant de la prise médiane du demi-pont (11u, 11v, 11w) formé par l'élément de commutation de puissance (13u, 13v, 13w) est positif et qu'une variation du courant dans le temps est négative.

10. Dispositif de commande selon la revendication 9, dans lequel le motif de commutation décrit la commutation des autres éléments de commutation de puissance (13u, 13v, 13w) reliés au potentiel haut (12) de l'entrée de tension continue (3) vers un état de blocage.

11. Dispositif de commande selon l'une des revendications 8 à 10, dans lequel le premier motif de commutation décrit la commutation d'un élément de commutation de puissance (15u, 15v, 15w) relié au potentiel bas (14) de l'entrée de tension continue (3) vers un état conducteur, si un courant provenant de la prise médiane du demi-pont (11u, 11v, 11w) formé par l'élément de commutation de puissance (15u, 15v, 15w) est négatif et qu'une variation du courant dans le temps est positive.

12. Dispositif de commande selon la revendication 11, dans lequel le premier motif de commutation décrit la commutation des autres éléments de commutation de puissance (15u, 15v, 15w) reliés au potentiel bas (14) de l'entrée de tension continue (3) vers un état de blocage.

13. Onduleur (1) pour une machine asynchrone (10), comprenant une entrée de tension continue (3), une unité de puissance (5) avec trois demi-ponts (11u, 11v, 11w) formés chacun de deux éléments de commutation de puissance (13u, 13v, 13w, 15u, 15v, 15w) et un dispositif de commande (2) selon l'une des revendications précédentes.

14. Véhicule (25), comprenant une machine asynchrone (10) pour l'entraînement du véhicule (25) et un onduleur (1) selon la revendication 13.

15. Procédé pour faire fonctionner un onduleur (1), qui présente une entrée de tension continue (3) et une unité de puissance (5) avec trois demi-ponts (11u, 11v, 11w) formés chacun de deux éléments de commutation de puissance (13u, 13v, 13w, 15u, 15v, 15w), comprenant les étapes suivantes :

   • commande des éléments de commutation de puissance (13u, 13v, 13w, 15u, 15v, 15w) dans un mode de fonctionnement normal pour convertir une tension continue appliquée à l'entrée de tension continue (3) en un courant alternatif multiphasé fourni à une sortie de courant alternatif (4) ;
   • évaluation d'un état de signal d'un signal (22) indiquant une séparation d'une source de tension continue (9) de l'entrée de tension continue (3) ; et
   • commande des éléments de commutation de puissance (13u, 13v, 13w, 15u, 15v, 15w), en fonction d'un résultat de l'évaluation, pour adopter en alternance un premier motif de commutation, qui provoque un freinage par courant continu, et un deuxième motif de commutation, qui provoque une roue libre.

# Fig. 1

# Fig. 2

EP 3 853 989 B1

**Fig. 3**